# EUROPEAN PATENT APPLICATION

(11) **EP 4 530 376 A1**
(43) Date of publication of application: **02.04.2025**
(21) Application number: 23020448.9
(22) Date of filing: 26.09.2023
(51) Int. Cl.: C25B 1/04, C25B 9/05, C25B 9/19, C25B 9/70, C25B 15/02, C25B 15/08

(54) **MODULAR ELECTROLYSIS SYSTEM**

(71) Applicant: Linde GmbH, 82049 Pullach (DE)
(72) Inventor: Vogel, Johannes, 82049 Pullach (DE); Hübsch, Ulf, 82049 Pullach (DE); Chromik, Karsten, 82049 Pullach (DE); Gaube, Gerald, 82049 Pullach (DE); Steinmetz, Eckard, 82049 Pullach (DE); Leupolt, Georg, 82049 Pullach (DE); Dietzen, Markus, 82049 Pullach (DE); Paschke, Mike, 82049 Pullach (DE); Laschinsky, Peter, 82049 Pullach (DE)
(74) Representative: Imhof, Dietmar

(57) **Abstract**

The invention relates to a modular electrolysis system comprising mulitple modules, wherein each of the mulitple modules comprises a support frame and at least one interface accessible from outside the support frame and configured to connect the module with at least one of the remaining modules, the mulitple modules comprising a water-gas coarse separation module downstream an anode outlet of the electrolysis cell module, and a water-gas fine separation module downstream a liquid outlet of the water-gas coarse separation module.

## Description

The invention relates to a modular electrolysis system.

### Background

Typically, an electrolysis plant for the production of hydrogen and optionally oxygen from water is designed to meet specific customer needs and adapted to local requirements such as climatic conditions, on site energy availability and the like. Therefore, typical large-scale electrolysis systems are custom made apparatuses.

One of the main safety challenges in relation with water electrolysis is an explosion hazard due to hydrogen leakage into the oxygen product. Hydrogen is a very small molecule with very high diffusion coefficient and therefore very difficult to contain within a defined space within such an electrolysis plant. It can develop an explosive mixture with oxygen produced by the electrolysis system, which under certain circumstances can ignite somewhere and damage the electrolysis system because of the resulting explosion.

Some exemplary reasons for such a formation of an explosive mixture of hydrogen and oxygen in an electrolysis system shall be named here: The pressure difference between the electrodes can lead to a constant transfer of hydrogen (so-called "crossover") through the membrane. As a result, in certain operating scenarios (e.g., partial load, starting up, shutting down, standstill of individual electrolysis cells or so-called stacks), hydrogen can accumulate on the oxygen side of the electrolysis while the electrolysis units are in operation. A hydrogen leakage through membrane perforation from the cathode side with e.g., more 20 or 30 barg to the anode side can also occur because of undetected membrane defects while the electrolytic cells are in operation. A membrane rupture can lead to a sudden transfer of copious amounts of hydrogen from the cathode side to the anode side.

As a remedy for such situations, EP 3 971 324 A1, for example, discloses an electrolysis plant in which inert gas is incorporated into the oxygen product stream to reduce the hydrogen concentration.

However, the measures described in EP 3 971 324 A1 do not ensure inherently safe operation, since the measures are only taken when it has been detected that a specific hydrogen concentration has been exceeded. Typically, however, the response times of analysis equipment are too long to ensure safe operation.

### Summary of the invention

Against the above outlined background, the task arises of reducing the risk of explosion in water electrolysis, e.g., PEM (proton exchange membrane) electrolysis, and thus improving the operation of the electrolysis system. In this regard, in the context of the present invention, by internal leakages, a cross over of hydrogen from the highpressure system (hydrogen system; cathode side of the electrolysis) to the low-pressure system (oxygen / water system; anode side of the electrolysis) is meant. Operating pressures of the hydrogen system in the context of this invention may be about 30 bar, the oxygen / water side may be operated at low pressure conditions, for example in the range of atmospheric pressure up to 3 or 5 bar. The potential crossover point is the electrolysis stack. There a membrane separates the hydrogen from the oxygen / water system.

Another object of this invention is to reduce development, investment, and maintenance cost in relation to large-scale electrolysis systems.

The invention solves these objects at least partially by providing a modular electrolysis system and corresponding modules according to the appended independent claims. Advantageous embodiments and further aspects are subject matter of the respective dependent claims and the following description.

A modular electrolysis system according to the invention comprises at multiple modules, wherein each of the multiple modules comprises a support frame and at least one interface accessible from outside the support frame and configured to connect the respective module with at least one of the remaining modules, the multiple modules comprise a water-gas coarse separation module downstream an anode outlet of the electrolysis cell module, and a water-gas fine separation module downstream a liquid outlet of the water-gas coarse separation module. In an embedment, the multiple modules further comprise at least one of: a power supply module, a water supply module, an electrolysis cell module comprising at least one electrolysis cell stack,

This reduces investment and maintenance as well as development costs, since standardized functional units, i.e. the respective modules, with standardized interfaces may be combined with one another to meet the specific requirements of a specific project. In at least one embodiment, at least some of the modules may be partially or entirely prefabricated off-site and then shipped to the construction site for final assembly. The high degree of preengineering and possible prefabrication leads to a significant reduction in assembly and testing costs and reduces project execution time. The modules may be designed in such a way that they can be set up decentrally, proved by testing and assembled on the construction site with minimal effort. Quality checks may, therefore, already be performed off site, thereby reducing overall assembly time and the risk of delays. In at least one embodiment, the support frame may comprise stackable self-supporting steel frame structures. Equipment-specific requirements for the foundations can thus be avoided. This reduces interdependencies in project execution and saves time and money in the assembly, transport, and construction phases.

The modules may be configured in such a way that both inside (indoors, i.e. protected from atmospheric conditions) and outside (outdoors, i.e. subject to atmospheric conditions) installation of the modules is possible without changing the geometry of the components and/or modules.

The decomposition of the overall electrolysis system into functional units (i.e. modules) is a key element for standardized functional unit blocks. To meet different project-specific requirements, those functional unit blocks enable large and tailor-made electrolysis systems.

The invention also pertains to each of the modules named herein above, individually, namely to a power supply module, a water supply module, an electrolysis cell module, a water-gas coarse separation module and a water-gas fine separation module. Each of these modules can be used within such modular electrolysis system or in combination with one or more others of these moduels.

As already mentioned above, based on the pressure difference at the membrane (in the electrolysis cell module) a certain, constant hydrogen cross over will establish. During normal production modes the cross over hydrogen will be diluted by the produced oxygen and no hazardous atmosphere can be formed. Therefore, a minimal operation load may be defined in order to prevent formation of explosive mixtures on the anode side or downstream the anode side of the electrolysis cell module.

For operation modes in which the hydrogen pressure is maintained, and no oxygen is produced, a dilution gas may be injected downstream of the electrolysis stack to prevent the formation of an explosive hazardous atmosphere (primary explosion protection measures).

Unlike the constant cross over during normal operation, a membrane defect is a failure scenario and not predictable. A detection of such a failure, e.g. by measureing a hydrogen concentration on the anodfe side, is not reliable enough and would furthermore be too slow to initiate actions to prevent the consequences of the scenario. Therefore, primary explosion protection measures are not possible to implement in regard of such defects. In case of a cross over and taking the extremely low ignition energy of the hydrogen/oxygen mixture into consideration, the total elimination of all ignition sources (secondary explosion protection measures) is not possible as well. Nevertheless, ignition sources should be minimized as far as possible and eliminated if possible. This is particularly relevant in connection with the equipment downstream the anode side of the electrolysis cell module, i.e. the water-gas coarse separation module.

The power supply module in an embodiment, additionally to the already mentioned interface and support frame, comprises a power transformer and at least one rectifier.

In an embodiment, the power supply module comprises a standard shipping container, particularly a 20-ft-container or a 40-ft-container, as the support frame.

In an embodiment of the power supply module, the at least one rectifier is configured as an active front end rectifier. Such active front end rectifiers, particularly in contrast to typically used thyristor rectifiers, exhibit low harmonics and/or adjustable reactive power, which is beneficial for providing grid services (e.g. adjustable load).

In an embodiment of the power supply module, at least two rectifiers are connected to a single power transformer.

The water supply module, in an embodiment, additionally to the already mentioned support frame and interface, comprises at least one pump for providing electrolysis feed water to an interface terminal that is configured to be connected to an electrolysis cell module and for receiving cooling water from and/or providing cooling water to an interface terminal configured to be connected to any one or more module of the system.

In an embodiment, the feed water is also used as cooling water. This renders any dedicated heat exchangers in the electrolysis cell module obsolete, thereby generating cost and material savings.

In an embodiment, the water supply module comprises purification means for purifying one or more water streams before providing the respective water stream to the respective interface terminal.

In an embodiment, the water supply module comprises temperature control means for adjusting heat in the cooling and/or feed water. Particularly, a heat exchanger may be provided in the water supply module for removing or adding heat from or to the respective water stream. The heat exchanger may be realized as a compact and cost-efficient plate exchanger. The heat exchanger, independent of the specifically used configuration thereof, may be operated with ambient heat or in connection with a heat pump, e.g. a refrigerant cycle. Preferably, the heat exchanger is operated using a secondary cooling or heating circuit. This enables the use of conditioned heat transfer fluids, e.g. conditioned water or ethylene glycol or the like. Deposits in the heat exchanger (e.g. due to insufficiently conditioned cooling water) can thus be avoided and a more cost-effective control of the cooling water flow can be implemented compared to a process water control, while fouling can be avoided.

In an embodiment, the water supply module comprises a filter system, particularly a two-filter system with mesh sizes of 500 µm and 10 µm in the process water circuit upstream the interface terminal directed towards the electrolysis cell module, to protect the sensitive stack membrane.

In an embodiment, the water supply module may be configured to intermittently or continuously recirculate a partial flow of water from the process water circuit around the electrolysis cell module to a water polishing system to prevent an accumulation of contaminants. Such a water polishing system may be integrated within the water supply module or may be provided as a separate module with its own dedicated support frame and interface. Particularly, a flow-controlled recirculation stream to the water polishing system may be taken from the outlet stream of the temperature control means mentioned in connection with an embodiment of the water supply module. Separating the water polishing functionality from the electrolysis cell module provides the benefit of better scalability.

The recirculation rate can be varied based on analytical parameters to make ideal use of the water treatment system (i.e. water polishing system and/or purification means), which provides the feed stock to produce hydrogen. The required process analyzers including the possibility of adapting the recirculation rate to the existing water quality in the process water circuit may be part of the water supply module and/or the electrolysis cell module.

The polished water, here, also referred to as process water for the electrolysis may then be injected into the electrolysis cell module in a load dependent and flow-controlled manner.

In an embodiment, some or all of the provided pumps in the modular system are controlled in a load-dependent fashion in order to minimize the consumption of electrical energy in case of low load scenarios. Additionally or alternatively, adjusting the amount of recirculation based on continuous water analysis and thus optimizing the use of water treatment may be foreseen, which also increases the efficiency of the overall system and, particularly, the water supply module.

The electrolysis cell module, additionally to the already mentioned support frame and interface, comprises at least one water electrolysis cell stack with a number of electrolysis cells connected in series to one another, each electrolysis cell comprising a membrane separating an anode and a cathode of the electrolysis cell.

In an embodiment, the electrolysis cell module comprises at least one stack compartment for housing at least one electrolysis cell stack in each of the at least one compartment and one single valve compartment housing a number of valves therein, the valves being configured to control one or more fluid streams into and/or out of the at least one stack compartment.

In an embodiment of such an electrolysis cell module, each cell compartment has a length in the range of 2000 mm to 3500 mm and/or a width in the range of 750 mm ot 1500 mm and/or a height in the range of 2000 mm to 3500 mm.

Particularly, the valve compartment may comprise purging means configured to purge the inner volume of the valve compartment surrounding the valves therein with a purge gas stream.

In an embodiment of the electrolysis cell module, each electrolysis cell stack is configured with a nominal electrical power consumption in the range of 0.5 MW to 5 MW, e.g. 2 MW, and/or the electrolysis cell module has a combined electrical power consumption in the range of 0.5 MW to 100 MW, e.g. 20 MW or 50 MW.

The water-gas coarse separation module according to the invention, additionally to the already mentioned support frame and interface, comprises a separator configured to separate a mixed phase fluid provided to the water-gas coarse separation module into a water stream containing at least 70%, 80%, 90%, 95%, 98%, 99% or more than 99.5% of the water contained in the mixed phase fluid, and a gas stream containing at least 90%, 95%, 98%, 99%, 99.5% or more than 99.8% of any gases, particularly oxygen and/or hydrogen, contained in the mixed phase fluid.

In one embodiment of the water-gas coarse separation module, the mixed phase fluid separation is realized with a pipeline with specific geometrical boundary conditions. In other words, the water-gas coarse separation module is configured to provide mixed phase fluid separation by menans of its geometry.

In an embodiment, the water-gas coarse separation module is configured to withstand an explosion therein.

As the failure scenario explained above and the ignition of a potentially formed hazardous atmosphere cannot be excluded, the consequences are minimized by constructive explosion protection measures according to embodiments of the invention to a level that ensures no personell is harmed. Constructive explosion protection measures are considered to mean that the related equipment and piping (connecting piping between electrolysis stack and the water-gas coarse separation module, the water-gas coarse separation module, O2 vent line) are designed explosion/detonation proof. In the context of this invention, no differentiation is made between explosion pressure resistant and explosion pressure shock resistant, both designs will contain the explosion with or without permanent deformation. The mechanical integrity of the system is ensured. The release of hazardous material and potential harm to personell is excluded. Thereby, the number of system parts with a high requirement for mechanical strength through design measures is limited. This enables thinning of wall thickness in other components and, more specifically, in all modules apart from the water-gas coarse separation module and thus reduces the resources and costs required during building, transport, and construction of the individual modules.

In an embodiment, the water-gas coarse separation module comprises a liquid outlet towards the interface of the water-gas coarse separation module, wherein the liquid outlet is configured as a siphon.

In one embodiment of the invention, the water-gas coarse separation module is equipped with a vibration and/or acceleration sensor, with which an explosion event can be immediately detected and this information made available to the control system of the electrolysis plant.

The water-gas fine separation module according to the invention, additionally to the already mentioned support frame and interface, comprises a separator configured to separate a mixed fluid provided to the water-gas fine separation module into a water stream containing less than 1%, 0.3%, 0.1%, 0.03% or less than 0.01 % of gaseous and/or dissolved gaseous constituents and a gas stream containing at least 99.9 % of the gaseous and/or diluted gaseous constituents of the mixed fluid.

In an embodiment, the water-gas fine separation module comprises purging means configured to provide a hydrogen free purge gas stream into the water-gas fine separation module, wherein the purge gas stream is withdrawn from the water-gas fine separation module together with the gas stream, particularly wherein the purge gas stream does not contain carbon dioxide.

In an embodiment, the water-gas fine separation module may have an interface terminal for exporting at least a part of the water stream to the water supply module for recycling to the other modules.

Another interface terminal may be foreseen in the water-gas fine separation module for importing the pretreated water stream from the water-gas coarse separation module. Particularly, this interface terminal may be configured for receiving the pretreated water stream by siphoning it from the water-gas coarse separation module in order to limit pressure transmission in case of an explosion in the water-gas coarse separation module. This massively reduces mechanical stability requirements for the water-gas fine separation module and, therefore significantly reduces investment costs and resource consumption without compromising operational safety.

In an embodiment, the gas stream exported from the water-gas fine separation module may additionally be diluted with a hydrogen free gas (e.g. nitrogen or air or a gas derived therefrom), in order to absolutely exclude any possibility for an explosion downstream the water-gas fine separation module. Optionally, the atmosphere surrounding the separator may also be purged with a hydrogen free gas to dilute any potentially leaking hydrogen to a concentration to well below explosive mixture concentration.

In an embodiment, the water-gas fine separation module is configured to separate microbubbles of gas, particularly gas stemming from electrolysis of water within the electrolysis cell module, from the mixed fluid. For this purpose, dedicated equipment, for example with structured plastic packings, may be used.

The water-gas coarse separation module and the water-gas fine separation module may both operate at ambient or atmospheric pressure conditions, i.e. in a pressure range of 0.8 bar to 1.2 bar. Both the respective water stream and the respective gas streams may be exported from the respective water-gas separation module at such ambient or atmospheric pressure level.

In an embodiment, where technically possible, the modular electrolysis system is provided with interfaces to export and/or recycle the available process heat and make it usable. The main interfaces for this are the integration of the process waste heat into a closed cooling/heating circuit and an interface to use the process heat from the safety purge or the oxygen or hydrogen product streams directly in an HVAC system. Additionally, the waste heat of the rectifier system may be made available to be used within the HVAC system. Such an HVAC system may be provided in the form of an additional module (with corresponding support frame and interface) configured to be connected to the system via one or more of the interfaces of the at least five modules of the system. Such recovered process heat may be used within the electrolysis system or off-site, i.e. exported to a consumer outside the electrolysis system. In order to recover such process heat, any module (particularly one or more of the water supply module, the power supply module and the electrolysis cell module) producing significant amounts of heat may have one or more interface terminals within its respective interface for exporting heat from the respective module.

In addtion to the already described modules, which may be considered core modules to the system, further modules may be provided in order to provide for additional functionalities and/or in order to facilitate installation of the system as a whole.

One such potential additional module is a piping module in which up to 30% of the entire system piping may be pre-installed. The piping module may comprise dedicated ducts for specific fluids, such as water, particularly cooling water and/or process water, nitrogen and air, particularly carbon dioxide free air and/or one or more products of the electrolysis: oxygen and/or hydrogen.

Another potential additional module is the already mentioned HVAC system, which may be provided as a separate module and may, for example, be used to provide preconditioned air to one or more of the other modules, particularly the core modules, such as the electrolysis cell module, in which such air may be used to purge the mentioned valve compartment, for example.

In such a HVAC module, return air from the power supply module and related electrical systems (e.g. heated up by the losses of the rectifiers) may be used for direct recirculation into the rectifiers (to keep the supply temperature above the frost, and above condensation temperature), and/ or for direct use for supply of the electrolysis cell module (to keep them frost free as well).

A direct ducted connection may be provided from the power supply module and electrolysis cell module to the air handling system (HVAC module), in order to prevent uncontrolled release into the room where the rectifiers are set up.

Return air from the electrolysis cell module (e.g. heated up by the heat losses of piping) may particularly be used for direct recirculation into the supply of the electrolysis cell module. In such a case, the recirculation volume may be limited to have acceptable hydrogen concentrations in supply air only. The maximum amount of recirculation air can be determined by safety calculation, and supply air may be monitored via gas detectors. Heat recovery systems between exhaust air of the electrolysis cell module and supply air from the HVAC module to the electrolysis cell module and/or to the power supply module may be utilised in order to maintain a desired temperature level and to increase efficiency. In the context of the HVAC module, closed-loop circuit systems may be used. By using such a closed loop, it is excluded to have any unwanted transfer of potentially hazardous air to the supply air stream, since a transfer media is acting as a barrier.

This design leads to relevant advantages in the energy supply required for heating and air conditioning of the electrolysis system. Typically, electrolysis plants need huge quantities of purge air for safety reasons (to dilute any hydrogen that might leak, and/or to reduce the extension of a potentially formed zone of hazardous atmosphere). Typically, with conventional solutions, to condition these air flows to the required parameters (frost free, and below a maximum temperature of typically 35 or 40°C), consumes heating energy and electrical energy (in case of cooling).

Using an HVAC module as set out herein above, the additional heating energy required can be reduced to almost zero for the running plant (even for outside temperatures down to -25°C and lower). The cooling energy, if required in hot climates, can be reduced as well by the recirculation of the electrolysis cell module return air, and the heat recovery system.

The oxygen flow vented to the free atmosphere can optionally be combined with the purge air flow leaving the electrolysis cell module. As an example, the purge gas volume flow for each electrolysis cell stack within the electrolysis cell module may be constant, for example at 12000 m³/h, and may be defined through safety requirements. By combining both gas flows (used purge gas and oxygen vent stream), the formation of fog clouds can be significantly reduced by reducing the relative humidity at the venting location. Particularly, the two gas streams may be combined using a dedicated mixing device, for example a dedicated nozzle arrangement, which may be part of the HVAC module.

A further potential additional module is an oxygen product aftertreatment module which may be interfaced with the water-gas coarse separation module and/or the water-gas fine separation module in the respective gas stream path. This oxygen product aftertreatment module may, for example, comprise a recombination reactor for removing hydrogen within the oxygen product stream and a product recirculation and/or purification in order to provide an oxygen product with desired quality specification.

Such an oxygen product purification may also be realized in the form of a separate additional module.

Another additional module may be provided for supplying purge gas to the electrolysis system. Such a purge gas supply module may be configured to provide a purge gas, particularly carbon dioxide free air in order to prevent any contamination of process water with carbon dioxide as this would change the process water's pH value and therefore disturb the electrolysis process. Removing carbon dioxide from air is typically much less cost intensive than providing any other suitable purge gas, such as nitrogen.

Further possible additional modules usable in the context of the system provided by this invention include a hydrogen purification module, a product liquefaction module and a storage module, particularly a pressurized and/or liquid product storage module.

In the following, advantages and further aspects of the invention are described with regard to the appended drawing, wherein

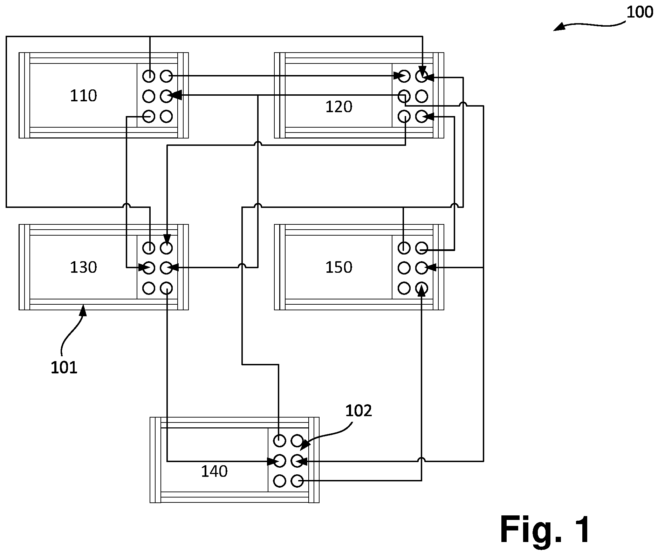

Figure 1 schematically depicts an embodiment of a modular electrolysis system according to the invention.

In Figure 1, an embodiment of a modular electrolysis system is schematically depicted and collectively referred to with 100.

The system 100 comprises multiple modules (110, 120, 130, 140, 150), each comprising a support frame 101 and an interface 102 for connecting the modules with one another.

The support frame 101 may, for example, comprise carrier elements such as steel beams and, optionally, wall and/or ceiling and/or floor panels. The support frame 101 may, particularly, be configured for stacked assembly of modules, i.e. the support frame 101 of one module may be mechanically sufficiently stable to support the weight of more than one module, and more particularly, the combined weight of at least two modules, such that one module may be assembled on top of another one without any additional supporting structure.

The system 100, in the embodiment shown, comprises a power supply module 110, a water supply module 120, an electrolysis cell module 130, a water-gas coarse separation module 140 and a water-gas fine separation module 150. As already mentioned, more than these five modules may be combined to provide additional functionality, but these five modules are typically required for the production of hydrogen from water by electrolysis.

The power supply module 110, in the example shown, imports electrical energy from outside the electrolysis system 100. For example, such imported electrical energy may be provided in the form of high voltage alternating current, such as 10kV, 15kV, 20kV or 30kV AC The imported current may be one-phase or multi-phase AC, particularly three-phase AC. The power supply module comprises at least one transformer for transforming the imported AC to a different voltage, e.g. to a voltage in the range of 0.5 to 3kV, for example to 1.5kV AC. The power supply module 110 further comprises at least one rectifier and more particularly as many rectifiers as there are electrolysis cell stacks in the electrolysis cell module 130. The rectifier(s) are configured to convert the AC current from the transformers into direct current suitable for electrolysis. For example, DC exported from the power supply module via the interface 102 downstream the rectifier(s) may be 1.5kV DC.

The interface 102 of the power supply module comprises at least one power transfer interface terminal for electrically connecting the power supply module 110 with the electrolysis cell module 130.

The water supply module 120 is configured to provide cooling and process water streams to the other modules 110, 130, 140, 150 via its interface 102. The water supply module 120 may be configured to import water from outside the system 100, for example, from a ground water reservoir, a precipitation collection reservoir, a river, a lake or from the sea, and to condition imported water, for example by removing contaminants such as dissolved salts and/or gases and/or suspended particles. The water supply module 120 may also be configured to receive return water from any of the other modules 110, 130, 140, 150.

The electrolysis cell module 130 comprises at least one cell stack, particularly in a defined compartment. The electrolysis cell module 130 is provided with DC current for electrolysis from the power supply module 110 and with process water to be electrolysed from the water supply module 120. Furthermore, the electrolysis cell module 130 receives cooling water (which may be identical with the process water) from the water supply module 120. A water stream containing oxygen (also referred to as mixed fluid) is exported from an anode side of the electrolysis cell module 130 to the water-gas coarse separation module 140 via interface 102.

In the water-gas coarse separation module 140, the mixed phase fluid from the electrolysis cell module 130 is coarsely separated into a gas stream and a water stream. The gas stream may be vented to the atmosphere surrounding the system 100 at a safe position (i.e. a position with good ventilation and no ignition sources, ideally far away from any other equipment). The gas stream may also be used as an additional product, particularly after specific aftertreatment.

In the embodiment shown, the water-gas coarse separation module is mechanically sufficiently stable to withstand an explosion of hydrogen and oxygen therein.

The water stream from the water-gas coarse separation module is sent to the water-gas fine separation module 150, preferably via a siphoning line. The water-gas fine separation module 150 is configured to remove remaining diluted or suspended gas from the water received from the water-gas coarse separation module 140. Typically, during electrolysis of water, microscopic bubbles of oxygen may form within the process water. Those microscopic bubbles are relatively stable within the process water and therefore difficult to separate from the water. The water-gas fine separation module 150 is configured to remove such microscopic bubbles effectively. For this purpose, the water-gas fine separation module 150 may, for example, comprise a fluid tank into which the water stream from the water-gas coarse separation module 140 is sent. The tank may contain structured plastic packings which agglomerate the microscopic bubbles, thereby forming bigger bubbles which combine themselves to a gas stream by gravitational forces. This gas stream may also be vented to a safe location or may be combined with the gas stream from the water-gas coarse separation module 140 to be used as an additional product. The resulting water stream from the water-gas fine separation module 150 may then be recycled to the water supply module 120.

## Claims

1. Modular electrolysis system (100) comprising mulitple modules, wherein each of the mulitple modules comprises a support frame (101) and at least one interface (102) accessible from outside the support frame and configured to connect the module with at least one of the remaining modules, the mulitple modules comprising a water-gas coarse separation (140) module downstream an anode outlet of the electrolysis cell module, and a water-gas fine separation module (150) downstream a liquid outlet of the water-gas coarse separation module.

2. System (100) according to claim 1, the water-gas coarse separation module comprising a separator configured to separate a mixed fluid provided to the water-gas coarse separation module into a water stream containing at least 70%, 80%, 90%, 95%, 98%, 99% or more than 99.5% of the water contained in the mixed fluid, and a gas stream containing at least 90%, 95%, 98%, 99%, 99.5% or more than 99.8% of any gases, particularly oxygen and/or hydrogen, contained in the mixed fluid.

3. System (100) according to claim 2, the water-gas coarse separation module configured to withstand an explosion therein.

4. System (100) according to claim 2 or 3, the water-gas coarse separation module comprising a liquid outlet towards the interface of the water-gas coarse separation module, wherein the liquid outlet is configured as a siphon.

5. System (100) according to any one of the preceding claims, the water-gas fine separation module comprising a separator configured to separate a mixed fluid provided to the water-gas fine separation module into a water stream containing less than 1%, 0.3%, 0.1%, 0.03% or less than 0.01% of gaseous and/or dissolved gaseous constituents and a gas stream containing at least 99.9 % of the gaseous and/or diluted gaseous constituents of the mixed fluid.

6. System (100) according to claim 5, the water-gas fine separation module comprising purging means configured to provide a hydrogen free purge gas stream into the water-gas fine separation module, wherein the purge gas stream is withdrawn from the water-gas fine separation module together with the gas stream, particularly wherein the purge gas stream does not contain carbon dioxide.

7. System (100) according to any one of the preceding claims, the mulitple modules further comprising at least one of: a power supply module (110), a water supply module (120), an electrolysis cell module (130) comprising at least one electrolysis cell stack.

8. System (100) according to claim 7, the power supply module for a system comprising a power transformer and at least one rectifier.

9. System (100) according to claim 8, the power supply module comprising a standard shipping container, particularly a 20-ft-container or a 40-ft-container, as the support frame, and/or wherein, in the power supply module, the at least one rectifier is configured as an active front end rectifier, and/or wherein, in the power supply module, at least two rectifiers are connected to a single power transformer.

10. System (100) according to any one of the preceding claims, the water supply module comprising at least one pump for providing electrolysis feed water to an interface terminal that is configured to be connected to an electrolysis cell module and for receiving cooling water from and/or providing cooling water to an interface terminal configured to be connected to any one or more modules of the system.

11. System (100) according to claim 10, the water supply module comprising purification means for purifying one or more water streams before providing the respective water stream to the respective interface terminal.

12. System (100) according to any one of the preceding claims, the electrolysis cell module comprising at least one water electrolysis cell stack with a number of electrolysis cells connected in series to one another, each electrolysis cell comprising a membrane separating an anode and a cathode of the electrolysis cell.

13. System (100) according to claim 14, the electrolysis cell module, comprising at least one stack compartment for housing at least one electrolysis cell stack in each of the at least one compartment and one single valve compartment housing a number of valves therein, the valves being configured to control one or more fluid streams into and/or out of the at least one stack compartment.

14. System (100) according to claim 13, wherein, in the electrolysis cell module, the valve compartment comprises purging means configured to purge the inner volume of the valve compartment surrounding the valves therein with a purge gas stream.

15. System according to claim 13 o 14, wherein, in the electrolysis cell module, each electrolysis cell stack is configured with a nominal electrical power consumption in the range of 0.5 MW to 5 MW, and/or wherein the electrolysis cell module has a combined electrical power consumption in the range of 0.5 MW to 100 MW.

16. Water-gas coarse separation module configured for use with a system (100) according to any one of the precing claims, comprising a separator configured to separate a mixed fluid provided to the water-gas coarse separation module into a water stream containing at least 70%, 80%, 90%, 95%, 98%, 99% or more than 99.5% of the water contained in the mixed fluid, and a gas stream containing at least 90%, 95%, 98%, 99%, 99.5% or more than 99.8% of any gases, particularly oxygen and/or hydrogen, contained in the mixed fluid.

17. Water-gas coarse separation module according to claim 19, configured to withstand an explosion therein, and, preferably, comprising a liquid outlet towards the interface of the water-gas coarse separation module, wherein the liquid outlet is configured as a siphon.
